# EUROPEAN PATENT SPECIFICATION

(11) **EP 1 768 425 B1**
(45) Date of publication and mention of the grant of the patent: **06.02.2008**
(21) Application number: 05256027.3
(22) Date of filing: 27.09.2005
(51) Int. Cl.: H04Q 7/22, H04L 12/58

(54) **Adaptive data delivery**
Adaptive Datenzustellung
Livraison adaptative de données

(43) Date of publication of application: 28.03.2007
(60) Divisional application: 07122411.7
(73) Proprietor: Research In Motion Limited, Waterloo, Ontario N2L 3W8 (CA)
(72) Inventor: Lewis, Allan David, New Dundee, Ontario, N0B 2E0 (CA); Mousseau, Gary, Waterloo, Ontario, N2L 6M5 (CA)
(74) Representative: Hibbert, Juliet Jane Grace

(56) References cited:
- EP-A- 0 903 906
- EP-A- 1 047 239
- WO-A-20/05065296

## Description

### FIELD OF THE INVENTION

The present invention generally relates to a wireless communication system, and more specifically to a system and a method for adaptively delivering data to a wireless mobile device based upon the availability of the wireless mobile communication device in the wireless communication system.

### BACKGROUND OF THE INVENTION

In a wireless communication system designed to deliver data to a wireless mobile communication device ("mobile device") such as a cellular telephone, a two-way pager, a wireless communication capable personal digital assistant ("PDA"), and other similar device, there are several main components in the wireless communication system. A host service, which provides services such as e-mail, calendar, and Internet web browsing, holds the data to be delivered to the mobile device. The host service is coupled to a router, which couples the host service and a wireless network that is designed to communicate with the mobile device. To make a timely delivery of the data, the host service forwards the data for the mobile device to the router when the data becomes available. The router then forwards the data to the wireless network, which transmits the data to the mobile device. If the mobile device fails to receive the data, the router queues the data and re-forwards the data to the wireless network, which re-transmits the data to the mobile device. This process continues until the mobile device receives the data and acknowledges the reception or the process times out after a predetermined time period. While the data is being transmitted and queued, another data may become available for the mobile device in the host service, and may be forwarded to the router. The other data is then forwarded to the wireless network and is transmitted to the mobile device, but fails to be received by the mobile device. The host service continues to transmit more data, as they become available, to the router without the knowledge of the mobile device thereby wasting the host service resources, undeliverable data continues to accumulate in the router wasting the router resources, and the capacity in the wireless network is wasted by repeatedly transmitting the data without having any indication that the delivery of the data will be successful.

EP 0903906A2 describes a communication scheme for improving the performance of communications utilizing the transport layer connection provided via a radio network, by enabling a control of the transport layer connection according to the radio communication state and property of the radio terminal, without changing implementation of the transport layer of a terminal connected to a wire network.

EP 1047239 describes a data communications system for stopping and resuming a data communication, comprising at least first and second communications devices each provided with an application unit for instructing to conduct data communications with an opposite application unit. The data communications system also comprises a communication control unit which reports a transmission stop instruction to the respective application units of the first and second communications devices.

### SUMMARY

A wireless communication system, comprising a host service, a wireless router system coupled to the host service, a wireless network coupling the wireless router system and a wireless mobile communication device ("mobile device"), adaptively delivers data to the mobile device in the wireless communication system. When the host service has data to be delivered to the mobile device, it first determines the availability status of the mobile device at the host service. The availability status may be based upon its previous data delivery to the mobile device, a cached availability status at the wireless router system, which may check whether the mobile device is registered in the wireless network. The wireless network may be, but not limited to, a cellular telephone network, a two-way paging network, a short range wireless network such as Bluetooth^{™} and IEEE 802.11 compliant network, and others alike, through which the mobile device is accessible by the wireless router system. If the mobile device is determined to be available, then the host service transmits the data to the wireless router system, which delivers the data though the wireless network to the mobile device. However, if the mobile device is determined to be unavailable, then the host service queues the data but does not send the data until the mobile device is re-determined to be available, thereby avoiding unnecessary transmission of the data directed to the mobile device.

Aspects and features of the invention are set out in the accompanying claims.

### BRIEF DESCRIPTION OF THE DRAWINGS

FIG. 1 is an exemplary environment in which a wireless communication system in accordance with at least one of the preferred embodiments may be practiced;
FIG. 2 is an exemplary state diagram of a host service in accordance with at least one of the preferred embodiments;
FIG. 3 is an exemplary sequence diagram illustrating a sequence of adaptive delivery of data from a host service to a wireless mobile communication device in a wireless communication system in accordance with at least one of the preferred embodiments;
FIG. 4 is an exemplary flowchart illustrating a process of adaptive delivery of data to a wireless mobile communication device in a wireless communication system in accordance with at least one of the preferred embodiments;
FIG. 5 is an exemplary flowchart further illustrating the process for setting the availability status at the host service based upon the cached availability status at the wireless router system in accordance with at least one of the preferred embodiments;
FIG. 6 is an exemplary flowchart further illustrating the process for determining whether to re-transmit the data from the wireless router system to the mobile device in accordance with at least one of the preferred embodiments;
FIG. 7 is an exemplary block diagram of a wireless communication system configured to adaptively deliver data to a wireless mobile communication device in the wireless communication system in accordance with at least one of the preferred embodiments.

### DETAIL DESCRIPTION OF THE PREFERRED EMBODIMENTS

A wireless communication system, comprising a host service, a wireless router system coupled to the host service, a wireless network coupling the wireless router system and a wireless mobile communication device ("mobile device"), adaptively delivers data to the mobile device in the wireless communication system. When the host service has data to be delivered to the mobile device, it first determines the availability status of the mobile device at the host service. The availability status may be based upon its previous data delivery to the mobile device, a cached availability status at the wireless router system, which may check whether the mobile device is registered in the wireless network. The wireless network may be, but not limited to, a cellular telephone network, a two-way paging network, a short range wireless network such as Bluetooth^{™} and IEEE 802.11 compliant network, and others alike, through which the mobile device is accessible by the wireless router system. If the mobile device is determined to be available, then the host service transmits the data to the wireless router system, which delivers the data though the wireless network to the mobile device. However, if the mobile device is determined to be unavailable, then the host service queues the data but does not send the data until the mobile device is re-determined to be available, thereby avoiding unnecessary transmission of the data directed to the mobile device.

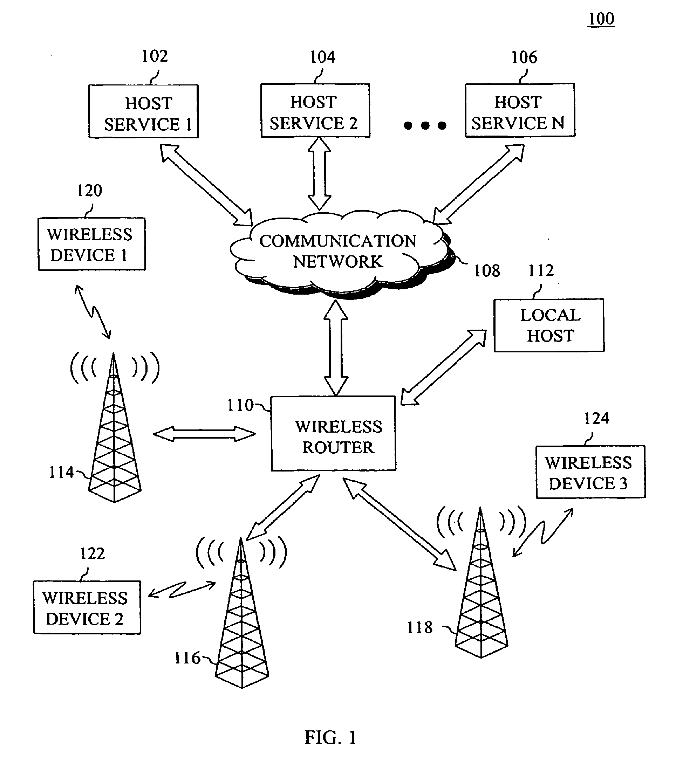

FIG. 1 is an exemplary wireless communication system 100 in which a wireless communication system in accordance with at least one of the preferred embodiments may be practiced. The exemplary wireless communication system 100 includes a plurality of host services (three shown, 102, 104, and 106), each of which may have a plurality of services such as, but not limited to, e-mail, calendar, Internet web browser, and other applications, available to their subscribers. The host services 102, 104, and 106 are connected to a communication network 108 such as Internet, which connects to a wireless router system 110 allowing communication between the host services 102, 104, and 106 and the wireless router 110. The wireless router system 110 may also be connected to a host service, such as a local service 112, without the communication network 108. The wireless router system 110 is connected to a plurality of wireless networks (three shown, 114, 116, and 118), each of which may support a plurality of mobile devices (one in each wireless network is shown, 120, 122, and 124). The wireless networks 114, 116, and 118 may be a cellular telephone network, a two-way paging network, a short range wireless network such as Bluetooth^{™} and IEEE 802.11 compliant network, and others alike, and the mobile devices 120, 122, and 124 are device compatible with the corresponding wireless network.

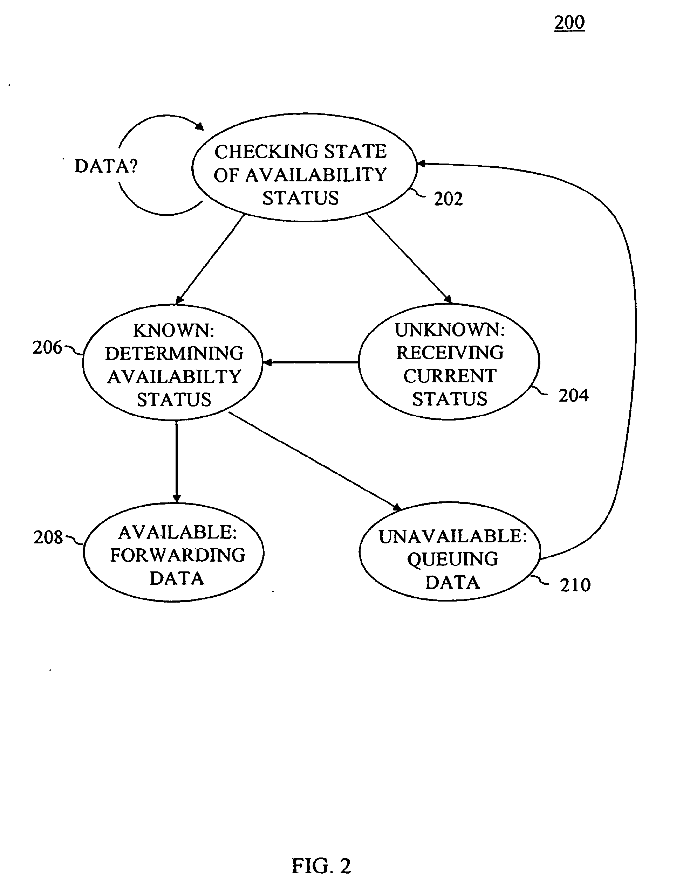

FIG. 2 is an exemplary state diagram 200 of a host service in accordance with at least one of the preferred embodiments. In this example, the states of the host service 102 attempting to deliver data to the mobile device 120 are illustrated. In state 202, the host service 102 checks whether the state of the availability status of the mobile device 120 is known upon generating the data to be delivered to the mobile device 120. The data may be generated internally by the host service 102 or may be generated in response to the host service 102 receiving corresponding data from another source. For example, the data may be a message from the host service 102 regarding a service that the host service provides to the mobile device 120 such as Internet web browsing, music downloads, news service, or any other host service specific services originating from the host service 102, or the data may be an e-mail message, sent from an external source and received by the host service 102, to be delivered to the mobile device 120. The availability status of the mobile device 120 may be, or become, unknown, for example, when the host service 120 initially generates the data having no prior knowledge of the availability of the mobile device 120, a previously stored availability status becomes stale or too old, or the host service encounters a reset condition such as losing connection to the wireless router system 110. If the host service 102 has data for the mobile device 120 and the availability status of in the mobile device 120 is unknown, the host service 102 requests, and receives from, the wireless router system 110 the current status of the mobile device 120 in the wireless router system 110 in state 204, and the availability status of in the mobile device 120 becomes known in state 206. The host service 102 may also receive an updated availability status whenever the availability status at the wireless router system 110 changes. If the host service 102 has data for the mobile device 120 and the availability status of in the mobile device 120 is known, in state 206, the host service 102 determines whether mobile device 120 is available based upon the known availability status. In state 208 where the known availability status of the mobile device 120 equals available, the host service forwards the data to the wireless router system 110. If the known availability status of the mobile device 120 equals unavailable available in state 210, the host service 102 queues the data and returns to state 202.

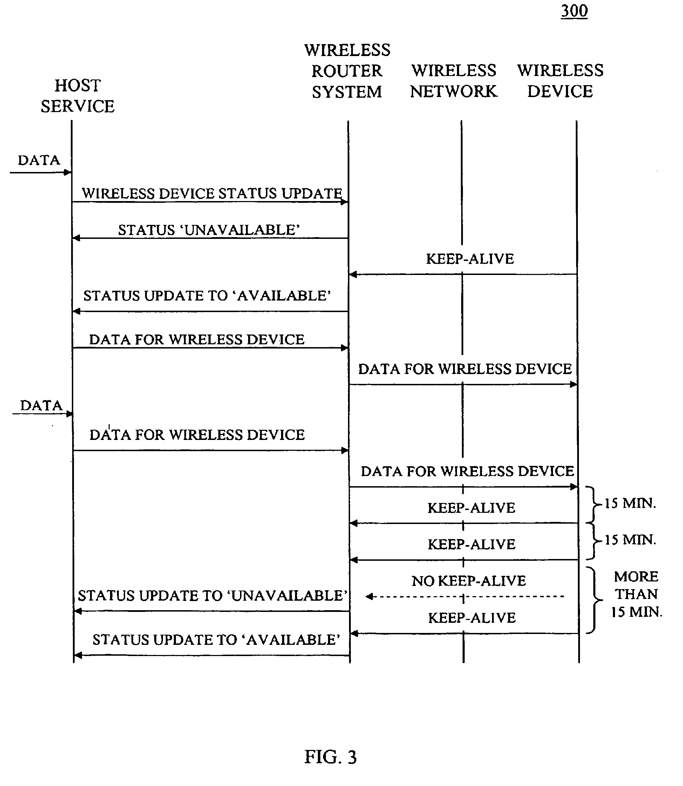

FIG. 3 is an exemplary sequence diagram 300 illustrating a sequence of adaptive delivery of data from the host service 102 to the mobile device 120 in the wireless communication system 100 in accordance with at least one of the preferred embodiments. When the host service 102 generates data for the mobile device 120 having no known state of the availability status of the mobile device 120, the host service 102 requests the availability status of the mobile device 120 at the wireless router system 110 from the wireless router system 110. In this example, the wireless router system returns the 'unavailable' status to the host service 102, and the data is queued in the host service 102. The host service 102 now has a known availability status of the mobile device 120, which is 'unavailable.' A while later, the wireless router system 110 receives a 'keep-alive' signal from the mobile device 120, indicating that the mobile device 120 is now available to receive data in the wireless communication system 100 through the wireless network 114, and has an effect of the mobile device 120 establishing a virtual connection with the wireless router system 110. The wireless router system now sends the 'available' status to the host service 102, and the host service 102 forwards the data to the wireless router system 110. The host service 102 now has a known availability status of the mobile device 120, which is 'available." The wireless router system now transmits the data to the mobile device 120 through the wireless network 114. When the host service 102 generates subsequent set of data for the mobile device 120, the availability status of the mobile device 120 is already know as 'available' and the host service 102 forwards the subsequent set of data to the wireless router system 114. The mobile device 120 is designed to transmit the 'keep-alive' signal at a predetermined time period such as every 15 minutes as shown in FIG. 3, and the wireless router system 110 keeps the current availability status of 'available' as long as the wireless router system 110 receives the keep-alive signal at the predetermined time period interval. FIG. 3 shows the wireless router system 110 receiving two consecutive keep-alive signals at the predetermined time period interval after transmitting the subsequent set of data. Because the wireless router system 110 has received the keep-alive signals at the predetermined time period interval, the availability status of the mobile device 120 is unchanged as available, and the wireless router system does not transmit an updated availability status to the host service 102. However, as shown in FIG. 3, the wireless router system 110 fails to receive the keep-alive signal from the mobile device 120 during the third expected interval. The availability status of the mobile device 120 is now changed to 'unavailable' and the wireless router system 110 transmits the updated availability status of 'unavailable' to the host service 102. The host service 102 then updates the availability status to 'unavailable' such that if any subsequent data for the mobile device 120 is generated while the availability status is 'unavailable,' the host service 102 queues such data. A while later, the wireless router system 110 again receives the keep-alive signal from the mobile device 120, and updates the availability status to 'available.' Because there has been a change in the availability status, the wireless router system transmits the updated availability status of 'available' the host service 102.

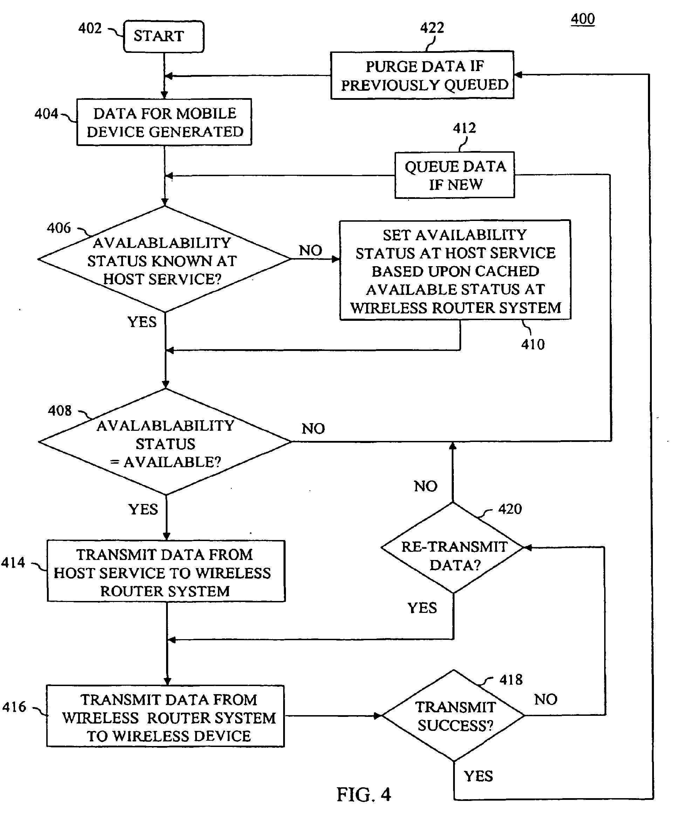

FIG. 4 is an exemplary flowchart 400 illustrating a process of adaptive delivery of data to a mobile device in the wireless communication system 100 in accordance with at least one of the preferred embodiments. For the purpose of the illustration, the data to be delivered resides in the host service 102, and the data is to be delivered to the mobile device 120. As previously explained, a host service may be connected to the wireless router system 110 with or without the communication network 108 such as Internet. The process begins in block 402 and data to be delivered to the mobile device 120 is generated in the host service 102 in block 404. The data may be generated internally by the host service 102 or may be generated in response to the host service receiving corresponding data from another source. For example, the data may be a message from the host service 102 regarding a service that the host service 102 provides to the mobile device 120 such as Internet web browsing, music downloads, news service, or any other host service specific services originating from the host service 102, or the data may be an e-mail message, which is sent from an external source and received by the host service 102, to be delivered to the mobile device 120. Initially, such as the very first time the host service 102 is to deliver the data to the mobile device 120, the host service 102 has no knowledge of the availability of the mobile device 120 in the wireless communication system 100. Instead of assuming that the mobile device 120 is available to receive the data and transmitting the data to the mobile device 120, whether the availability status of the mobile device 120 is known at the host service 102 is determined in block 406. Whether the availability status of the mobile device 120 is known at the host service 120 in block 406 may be based upon a stored availability status at the host service 102. The availability status of the mobile device 120 may be deemed to be unknown if there is no stored availability status of the mobile device 120 such as when the process is first initiated and there is no prior stored availability status of the mobile device 120 at the host service 102. Even if the stored availability status of the mobile device 120 is known, it may be deemed to be unknown if the stored availability status becomes stale or too old. The stored availability status may also become unknown if a connection between the host service 102 and the wireless router system 110 is lost.

If the availability status of the mobile device 120 is determined to be known in block 406, the process advances to block 408. However, if the availability status of the mobile device 120 is determined to be unknown in block 406, the availability status of the mobile device 120 at the host service 102 is set equal to a cashed availability status of the mobile device 120 at the wireless router system 110 in block 410. The availability status of the mobile device 120 at the host service 102 now becomes known, and the process advances to block 408. In block 408, the value of the known availability status of the mobile device 120, i.e., available or unavailable, at the host service 102 is determined. For example, the mobile device 120 may be determined to be unavailable because the mobile device 120 is outside of a coverage area provided by the wireless network 114 or is turned off, or the wireless network 114 is unavailable or unable to transmit the message to the mobile device 120.

If the known availability status is determined to equal unavailable in block 408, then the data becomes pending and is queued in the host service 102 in block 412, and the process loops back to block 406. The pending data is only queued in the host service 102 only if the pending data to be queued is new, and is not re-queued if the pending data has been already queued in a previous iteration. Queuing of the pending data at the host service 102 is helpful in preserving resources in the case of recovery from a system related failure such as a lost connection to the wireless router 110. If the known availability status is determined to equal available in block 408, then the data is transmitted from the host service 102 to the wireless router system 110 in block 414. The data is then transmitted from the wireless router system 110 to the mobile device 120 through the wireless network 114 in block 416. In block 418, whether the data transmission to the mobile device 120 has been successful is determined. The successful data transmission from the wireless router system 110 to the mobile device 120 may be determined based upon a confirmation signal transmitted from the mobile device 120 in response to successfully receiving the data. For example, there may be a predetermined time period within which the confirmation signal from the mobile device 120 is expected after the data is transmitted from the wireless router system 110. The availability status of the mobile device 120 at the wireless router system 110 may be re-determining upon the confirmation signal, and the cached availability status at the wireless router system 110 may then be updated with the re-determined availability status. If the data transmission is determined to be successful in block 418, then the process loops back to block 404, and waits for next data. However, if the data transmission is determined to be unsuccessful in block 418, then whether the data should be re-transmitted to the mobile device 120 is determined in block 420. If the data is determined to be re-transmitted, then the process loops back to block 416 where the data is re-transmitted to the mobile device 120. If the data is determined not to be re-transmitted in block 420, then the process advances to block 412 where the data is queued at the host service 102, and the process from block 406 is repeated. However, if the indication signal from the mobile device 120 is received by the wireless router system 110 after the data has been queued in the host service 102, the cached availability status of the mobile device 120 at the wireless router system 110 is updated to "available". The updated cached availability status of "available" is transmitted to the host service 102 from the wireless router system 110, making the available status at the host service 102 in block 408 equal to available. At this time, the pending data, which was previously queued, becomes ready to be delivered to the mobile device 120, and is unqueued. Then the process for determining successful transmission of data to the mobile device 120 from the host service102, previously described in blocks 414, 416, 418 and 420, is followed. If the transmission of the queued data to the mobile device 120 is determined to be successful in block 418, then the previously queued data, which has now been successfully delivered to the mobile device 120, is purged in block 422. The process then advances to block 404, and waits for next data.

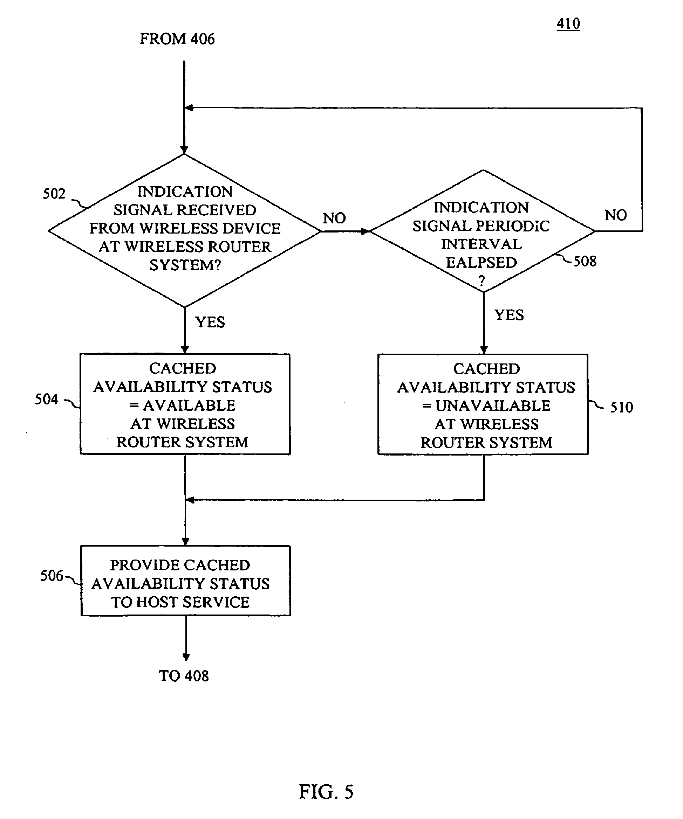

FIG. 5 is an exemplary flowchart further illustrating the process of block 410 for setting the availability status at the host service 102 based upon the cached availability status at the wireless router system 110 in accordance with at least one of the preferred embodiments. The cached availability status of the mobile device 120 at the wireless router system 110 may be based upon an indication signal transmitted from the mobile device 120. The indication signal, sometimes referred as a "heart beat" or a "keep-alive" signal, may be periodically transmitted by the mobile device 120, and if it is received by the wireless router system 110, it generally indicates that the mobile device 120 is available, or in a coverage area of the wireless network 114, and has an effect of the mobile device 120 establishing a virtual connection with the wireless router system 110. The indication signal, however, may also indicate unavailability of the mobile device 120 in the wireless communication system 100. For example, the mobile device 120 may have a very limited memory space left and is unable to receive further data, or due to its low battery status, its wireless communication ability may begin to shut down to conserve the battery power. The indication signal may include a plurality of functionality states of the wireless device 120 such as, but not limited to, the available memory space, battery status, and received signal strength indicator ("RSSI"). In this example for simplicity, the indication signal from the mobile device 120 is used to illustrate that the mobile device 120 is available in the wireless communication system 100.

In block 502, whether the indication signal from the mobile device 120 is received at the wireless router system 110 is determined. If it is determined that the indication signal has been received, then the cached availability status of the mobile device 120 at the wireless router system 110 is set to be "available" in block 504. If the cached availability status had previously been set to "unavailable" then it is re-set to be "available" in block 504. The process then advances to block 506. If the indication signal is determined not to have been received, then whether the indication signal periodic interval has elapsed is determined in block 508. If the indication signal periodic interval is determined not to have elapsed, then the process loops back to block 502. As long as the indication signal is received periodically at, or within, the indication signal periodic interval, the cached availability status of the mobile device 120 is kept equal to available. However, if the indication signal periodic interval is determined to have elapsed in block 508, then the cached availability status of the mobile device 120 at the wireless router system 120 is set to be "unavailable" in block 510. If the cached availability status had previously been set to "available" then it is re-set to be "unavailable" in block 510. The process then advances to block 506. In block 506, the cached availability status of the mobile device 120, either available or unavailable, at the wireless router system 110 is provided to the host service 102, setting the availability status to be known at the host service 102.

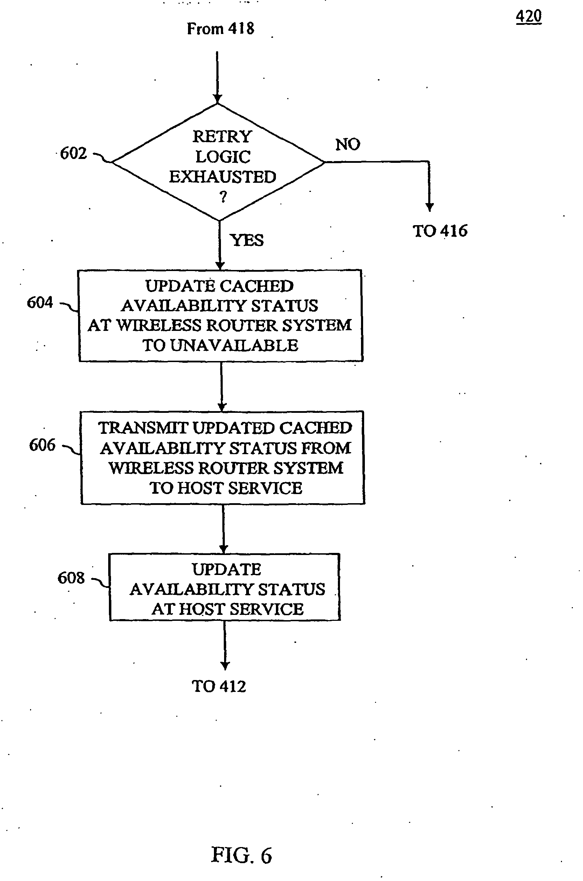

FIG. 6 is an exemplary flowchart further illustrating the process of block 420 for determining whether to re-transmit the data from the wireless router system 110 to the mobile device 120 as a result of the data transmission being determined to be unsuccessful in block 418 in accordance with at least one of the preferred embodiments. In block 602, whether predetermined re-try logic has been exhausted is determined. The predetermined re-try logic may include, and may be any combination of, a maximum number of re-transmissions, a maximum overall time of re-transmissions, and a maximum back-off time. When implementing a delivery system in a wireless network, it is common to use a progressive back-off method for re-transmitting data to a destination device. If the re-try logic has not been exhausted, then the process loops back to block 416 where the data is re-transmitted from the wireless router system 110 to the mobile device 120. However, if the re-try logic is exhausted, meaning that no confirmation signal has been received, the mobile device 120 is deemed to be unavailable and the cached availability status at the wireless router system 110 is updated to "unavailable" in block 604. The updated cached availability status is communicated from the wireless router system 110 to the host service 102 in block 606, and the availability status of the mobile device 120 at the host service 102 is updated to "unavailable." The process then advances to block 412 where the data is queued in the host service 102.

Because it takes a finite amount of time between when the mobile device 120 is determined to be available to receive the generated data and when the data is transmitted from the wireless router system 110 to the mobile device 120, there may be a change in the availability status of the mobile device 120 during that time. To address this concern, additional steps may be provided between block 414, in which the data is transmitted from the host service 102 to the wireless router system 110, and block 416, in which data is transmitted from the wireless router system 110 to the mobile device 120. For example, instead of solely relying on the availability status of the mobile device 120 at the host service 102, the availability status of the mobile device 120 may be evaluated at the wireless router system 110 when the data is transmitted from the host service 102 to the wireless router service 110 based upon the current cached availability status at the wireless router system 110. The decision whether to further transmit the data from the wireless router system 110 to the mobile device 120 then may be made based upon the evaluated cached availability status of the mobile device 120. If the evaluated cached availability status is "available", then the data is transmitted from the wireless router system 110 to the mobile device 120 in block 416, and the process previously described is followed. However, if the evaluated cached availability status is "unavailable", then the availability status of the mobile device 120 at the host service 102 is updated to "unavailable", and the data is queued at the host service 102 in block 412.

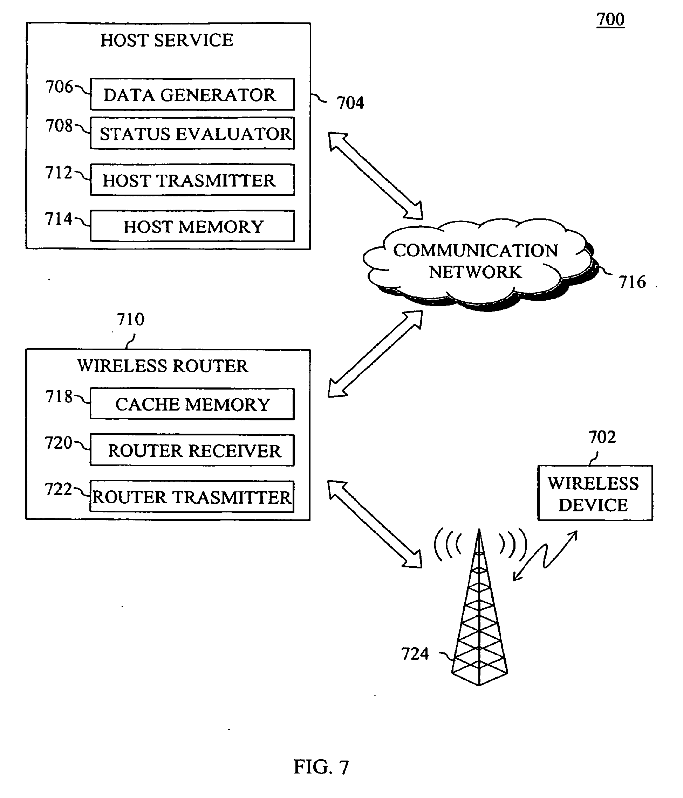

FIG. 7 is an exemplary block diagram of a wireless communication system 700 configured to adaptively deliver data to a wireless mobile communication device ("mobile device") in the wireless communication system 700 in accordance with at least one of the preferred embodiments. Although the wireless communication system 700 may include a plurality of host services, wireless networks, and wireless devices as previously shown in FIG. 1, the wireless communication system 700 in FIG. 7 is shown with a reduced number of elements for simplicity. The wireless communication system 700 includes a mobile device 702, and a host service 704, which includes a data generator 706 configured to generate data to be delivered to the mobile device 702. The data generator 706 may generate the data to be delivered to the mobile device 702 in response to receiving corresponding data. The host service 704 also includes a status evaluator 708 configured to determine whether an availability status of the wireless device 702 in the wireless communication system 700 is known. The host service 704 is coupled to a wireless router system 710, and has a host transmitter 712 that transmits the data to the wireless router system 710 if the known availability status of the mobile device 702 equals available. The host service 704 also has a host memory 714, and queues the data in the host memory 714 if the known availability status equals unavailable. The host service 704 only queues the data in the host memory 714 only if the data to be queued is new and does not requeue the data that has already been queued in a previous iteration. The host service 704 may be coupled to the wireless router system 710 through a communication network 716, which may be a wide area network such as Internet, and is configured to allow communication between the host service 704 and the wireless router system 710.

The wireless router system 710 includes a cache memory 718 configured to cache the availability status of the mobile device 702 in the wireless communication system 700. The wireless router system 710 also includes a router receiver 720 configured to receive the data from the host service 704, and a router transmitter 722 configured to transmit the data to a wireless communication network 724. The wireless communication network 724 is coupled to both the wireless router system 710 and the mobile device 702, and is configured to receive the data from the wireless router system 710 and to transmit the data to the mobile device 702. The wireless communication network 724 may be a cellular telephone network, a two-way paging network, a short range wireless network such as Bluetooth^{™} and IEEE 802.11 compliant network, and others alike, which is compatible with the mobile device 702.

If the status evaluator 708 determines that the availability status of the mobile device 702 in the wireless communication system 700 is not known, then the status evaluator 708 sets the cached availability status stored in the cache memory 718 as the known availability status. If the known availability status equals available, the host transmitter 712 transmits the data to the wireless router system 710. If the known availability status equals unavailable, the host service 704 queues the data in the host memory 714. The data generator 706 may treat the queued data in the host memory 714 as generated data.

The status evaluator 708 may also determine the availability status of the mobile device 702 based upon a stored availability status at the host service 704, for example in the host memory 714. The status evaluator 708 may determine that the availability status at the host service 704 is unknown if there is no stored availability status, or if a predetermined time period has passed since the availability status has been stored, meaning the stored availability status is too old. The status evaluator 708 may also determine that the availability status at the host service 704 is unknown if a connection between the host service 704 and the wireless router system 710 is lost.

At the wireless router system 710, the cached availability status of the wireless device 702 may be based upon an indication signal from the wireless device 702. The indication signal may sometimes be referred as a "heart beat" or a "keep-alive" signal. If the wireless router system 710 receives the indication signal, for example by the router receiver 720, it indicates that the wireless device 702 is available, or in a coverage area of the wireless network 724. The indication signal may include various states of the wireless device 702 in addition to an indication being available to receive the data from the host service 704 such as, but not limited to, current location based on a Global Positioning System ("GPS") data, battery status, memory status, transmit power level, receive signal strength indicator ("RSSI") value, and other parameters. If the wireless router system 710 receives the indication signal from the mobile device 702, the wireless router system 710 makes the cached availability status of the wireless device 702 equal to available in the cache memory 718. If the wireless router system 701 fails to receive the indication signal from the wireless device 702, the wireless router system 710 makes the cached availability status of the wireless device 702 equal to unavailable in the cache memory 718.

The wireless device 702 may transmit the indication signal periodically, and the wireless router system 710 may keep the cached availability status in the cache memory 718 equal to available if the wireless router system 710 receives the indication signal from the mobile device 702 periodically at a predetermined interval. Conversely, if the wireless router system 710 fails to receive the indication signal from the mobile device 702 periodically at a predetermined interval, the wireless router system may change the cached availability status to unavailable, and transmit the changed cached availability status to the host service 704, for example, by the router transmitter 722, causing the status evaluator 708 to update the known availability status to unavailable. The cached availability status may be changed back to available when wireless router system 710 once again receives the indication signal from the mobile device 702, and may transmit the changed cached availability status, now back to available, to the host service 704. If there is queued data at the host service 704 at this time, then the host transmitter 712 transmits the queued data to the wireless router system 710.

After the router transmitter 722 transmits the data to the mobile device 702, the wireless router system 710 may determine whether the data transmission to the wireless device 702 has been successful based upon a confirmation signal transmitted from the wireless device 702 in response to successfully receiving the data. The wireless router system 710 may then re-determine the availability status of the wireless device 702 based upon the confirmation signal, and update the cached availability status in the cache memory 718 with the re-determined availability status. The wireless router system 710 may be configured to receive the confirmation signal within a predetermined time period after transmission of the data to the mobile device 702, and to re-transmit the data to the mobile device 702 until predetermined re-try logic is exhausted if the wireless router system 710 fails to receive the confirmation signal within the predetermined time period. The predetermined re-try logic may one or any combination of a maximum number of re-transmissions, a maximum overall time of re-transmissions, and a maximum back-off time. When implementing a delivery system in a wireless network, it is common to use a progressive back-off method for re-transmitting data to a destination device. If the wireless router system 710 fails to receive the confirmation signal after the predetermined re-try logic is exhausted, then the wireless router system 710 updates the cached availability status in the cache memory 718 of the mobile device 702 to unavailable. The wireless router system 710 then transmits the updated cached availability status to the host service 704, which updates the availability status of the mobile device 702 to unavailable and to queue the data in the host memory 714. However, if the indication signal from the mobile device 702 is received by the wireless router system 710 after the data has been queued in the host memory 714, the cached availability status of the mobile device 702 at the wireless router system 710 is updated to "available". The updated cached availability status of "available" is transmitted to the host service 704 from the wireless router system 710, making the status evaluator 708 to set the availability status at the host service 702 to equal available. The wireless router system 710 then determines whether the transmission of queued data to the mobile device 702 has been successful as previously described. If the wireless router system 710 determines that the transmission of the queued data to the mobile device 702 has been successful, then the host service 704 purges the previously queued data, which has now been successfully delivered to the mobile device 702, from the host memory 714.

Because it takes a finite amount of time between when the wireless router system 710 determines that the mobile device 702 is available and when the router receiver 720 receives the data from the host service 704, it is possible for the mobile device 702 to have changed the availability status during that time. To address this possibility, the wireless router system 710 be configured to evaluate the cached availability status of the mobile device 702 after receiving the data from the host service 704 but before transmitting the data to the mobile network 724. If the evaluated cached availability status is equal to available, then the router transmitter transmits the data to the mobile device 702 through the wireless communication network 724. The determination of a successful reception of the data by the mobile device 702, re-transmission of the data, updating of the cached availability status and availability status at the host service 704, and queuing of the data may be performed as previously described.

While the preferred embodiments of the invention have been illustrated and described, it is to be understood that the invention is not so limited.

## Claims

1. A method for use in a wireless communication system (100) for adaptively delivering data from a host service (102) to a wireless mobile communication device (122) through a wireless router system (110) which is coupled to a plurality of wireless communication networks (114, 116, and 118) and a plurality of host services (102, 104, 106) for communications, the method comprising:
generating the data at the host service (102);
determining at the host service (102) whether an availability status of the mobile device (122) in the wireless communication network (116) is known, the availability status of the mobile device (122) in the wireless communication network (116) being set by and cached at the wireless router system (110) as one of available and unavailable;
if the availability status is known at the host service (102),
transmitting the data from the host service (102) to the wireless router system (110) if the known availability status at the host service (102) equals available; and
queuing the data at the host service (102) without transmission to the wireless router system (110) if the known availability status equals unavailable;
if the availability status is not known at the host service (102),
setting, at the host service (102), a cached availability status of the mobile device (122) from the wireless router system (110) as the known availability status.

2. The method of claim 1, further comprising:
transmitting the data from the wireless router system (110) to the mobile device (122) if the known availability status at the host service (102) equals available.

3. The method of claim 2, further comprising:
before setting a cached availability status of the mobile device (122) at a wireless router system (110) as the known availability status at the host service (102),
requesting the cached available status of the mobile device from the wireless router system.

4. The method of claim 3, wherein generating the data at the host service (102) includes:
generating the data in response to receiving corresponding data; and
queuing the data at the host service (102).

5. The method of claim 4, after queuing the data at the host service (102), further comprising:
updating the cached availability status of the mobile device (122) at the wireless router system (110) to available if the wireless router system(110) receives an indication signal;
transmitting the updated cached availability status of available to the host service (102) from the wireless router system (110);
transmitting the queued data from the host service (102) to the wireless router system (110); and
purging the queued data from the host service (102) if the transmission to the mobile device (122) is successful.

6. The method of claim 5, wherein determining at the host service (102) whether the availability status of the mobile device (122) in the wireless communication system (100) is known is based upon a stored availability status at the host service (102) and includes at least one of:
determining that the availability status at the host service (102) is unknown if there is no stored availability status at the host service(102);
determining that the availability status at the host service (102) is unknown if a predetermined time period has passed since storing the availability status; and
determining that the availability status at the host service (102) is unknown if a connection between the host service (102) and the wireless router system (110) is lost.

7. The method of claim 6, wherein the cached availability status of the mobile device (122) at the wireless router system (110) is based upon an indication signal from the mobile device (122).

8. The method of claim 7, wherein the indication signal includes a plurality of functionality states of the mobile device (122).

9. The method of claim 8, further comprising:
making the cached availability status of the mobile device (122) at the wireless router system (110) equal to available if the wireless router system (110) receives the indication signal from the wireless device (122), and
making the cached availability status of the mobile device (122) at the wireless router system (110) equal to unavailable if the wireless router system (110) fails to receive the indication signal from the mobile device (122).

10. The method of claim 9, further comprising:
after making the cached availability status of the mobile device (122) at the wireless router system (110) equal to available,
keeping the cached availability status at the wireless router system (110) equal to available if the wireless router system (110) receives the indication signal from the mobile device (122) at a predetermined interval; and
changing the cached availability status at the wireless router system (110) to unavailable if the wireless router system (110) fails to receives the indication signal from the mobile device (122) within the predetermined interval, and
transmitting the changed cached availability status from the wireless router system (110) to the host service (102);
after making the cached availability status of the mobile device (122) at the wireless router system (110) equal to unavailable,
changing the cached availability status at the wireless router system (110) to available if the wireless router system (110) receives the indication signal from the mobile device (122), and
transmitting the changed cached availability status from the wireless router system (110) to the host service (102).

11. The method of claim 5, after transmitting the data from the wireless router system (110) to the mobile device (122), further comprising:
determining whether the data transmission from the wireless router system (110) to the mobile device (122) has been successful based upon a confirmation signal transmitted from the mobile device (122) in response to successfully receiving the data;
re-determining the availability status of the mobile device (122) at the wireless router system (110) based upon the confirmation signal; and
updating the cached availability status at the wireless router system (110) with the re-determined availability status.

12. The method of claim 11, wherein determining whether the data transmission from the wireless router system (110) to the mobile device (122) has been successful based upon the confirmation signal transmitted from the mobile device (122) in response to successfully receiving the data includes:
receiving the confirmation signal within a predetermined time period after transmitting the data from the wireless router system (110) to the mobile device (122); and
if the wireless router system (110) fails to receive the confirmation signal within the predetermined time period, re-transmitting the data from the wireless router system (110) to the mobile device (122) until predetermined re-try logic is exhausted.

13. The method of claim 12, wherein the predetermined re-try logic includes at least one of:
a maximum number of re-transmissions,
a maximum overall time of re-transmissions, and
a maximum back-off time.

14. The method of claim 13, if the wireless router system (110) fails to receive the confirmation signal after the predetermined re-try logic is exhausted, further comprising:
updating the cached availability status of the mobile device (122) at the wireless router system (110) to unavailable;
transmitting the updated availability status of unavailable to the host service (102) from the wireless router system (110); and
queuing the data at the host service (102).

15. The method of claim 5, after transmitting the data from the host service (102) to the wireless router system(110), further comprising:
evaluating the cached availability status of the mobile device (122) at the wireless router system (110);
if the evaluated cached availability status is equal to available,
transmitting the data from the wireless router system (110) to the mobile device (122);
re-determining the cached availability status of the mobile device (122) at the wireless router system (110) based upon a confirmation signal from the mobile device (122) of successful reception of the transmitted data; and
updating the cached availability status at the wireless router system (110) with the re-determined availability status; and
if the evaluated cached availability status is equal to unavailable;
updating the availability status of the mobile device (122) at the host service (102) based upon the evaluated cached availability status at the wireless router system (110); and
queuing the data at the host service (102).

16. The method of claim 15, wherein re-determining the cached availability status of the mobile device (122) based upon the confirmation signal from the mobile device (122) of successful reception of the transmitted data includes:
receiving the confirmation signal within a predetermined time period after transmitting the data from the wireless router system (110) to the mobile device (122); and
if the wireless router system (110) fails to receive the confirmation signal within the predetermined time period, re-transmitting the data from the wireless router system (110) to the mobile device (122) until predetermined re-try logic is exhausted.

17. The method of claim 16, wherein the predetermined re-try logic includes at least one of:
a maximum number of re-transmissions,
a maximum overall time of re-transmissions, and
a maximum back-off time.

18. The method of claim 17, if the wireless router system (110) fails to receive the confirmation signal after the predetermined re-try logic is exhausted, further comprising:
updating the cached availability status of the mobile device (122) at the wireless router system (110) to unavailable;
transmitting the updated availability status of unavailable to the host service (110) from the wireless router system (110); and
queuing the data at the host service (102).

19. A wireless communication system (100) configured to adaptively deliver data to a wireless mobile communication device, the wireless communication system (100) comprising:
a host service (102) configured to generate data to be delivered to the mobile device (122), to determine whether an availability status of the mobile device (122) in a wireless communication network (116) is known, to transmit the data if the known availability status equals available, and queue the data without transmission if the known availability status equals unavailable;
a wireless router system (110) coupled to a plurality of wireless communication networks (114, 116, and 118) which include the wireless communication network (116) and a plurality of host services (110, 112, 114) which include the host service (102), the wireless router system (110) configured to determine and cache the availability status of the mobile device (122) in the wireless communication network (116) as one of available and unavailable, to receive the data from the host service (102) when the availability status of the mobile device (122) is available, and to transmit the data; and
the wireless communication network (116) coupled to the wireless router system (110) and the mobile device (122), the wireless communication network (116) configured to receive the data from the wireless router system (110) and to transmit the data to the mobile device (122),
wherein:
if the host service (102) determines that the availability status of the mobile device (122) in the wireless communication network (116) is not known, the host service (102) is further configured to set the known availability status based upon the cached availability status of the mobile device (122) at the wireless router system (110), to transmit the data if the set known availability status equals available, and to queue the data if the set known availability status equals unavailable.

20. The wireless communication system (100) of claim 19, wherein the data generated includes:
the data generated in response to the host service (102) receiving corresponding data, and
the data queued at the host service (102).

21. The wireless communication system (100) of claim 20, wherein, if the wireless router system (110) receives an indication signal after the data is queued at the host service (102), the wireless router system (110) is further configured to:
update the cached availability status of the mobile device (122) to available,
transmit to the host service (102) the updated the availability status of the mobile device (122),
receive the queued data from the host service (102), and
transmit the queued data to the mobile device (122).

22. The wireless communication system (100) of claim 21, wherein the host service (102) is further configured to purge the queued data if the transmission of the queued data to the mobile device (122) is successful.

23. The wireless communication system (100) of claim 22, wherein the host service (102) is further configured to determine whether the availability status of the mobile device (122) in the wireless communication network (116) is known is based upon a stored availability status at the host service (102), and to set the availability status at the host service (102) to unknown if:
there is no stored availability status,
a predetermined time period has passed since the availability status has been stored, and
a connection between the host service (102) and the wireless router system (110) is lost.

24. The wireless communication system (100) of claim 23, wherein the cached availability status of the mobile device (122) at the wireless router system (110) is based upon an indication signal from the mobile device (122).

25. The wireless communication system (100) of claim 24, wherein the indication signal includes a plurality of functionality states of the mobile device (122).

26. The wireless communication system (100) of claim 25, wherein the wireless router system (110) is further configured to make the cached availability status of the mobile device (122) equal to available if the wireless router system (110) receives the indication signal from the mobile device (122), and to make the cached availability status of the mobile device (122) at the wireless router system (110) equal to unavailable if the wireless router system (110) fails to receive the indication signal from the mobile device (122).

27. The wireless communication system (100) of claim 26, wherein, after the wireless router system (110) makes the cached availability status of the mobile device (122) equal to available, the wireless router system (110) is further configured to:
keep the cached availability status at the wireless router system (110) equal to available if the wireless router system (110) receives the indication signal from the mobile device (122) at a predetermined interval,
change the cached availability status to unavailable if the wireless router system (110) fails to receives the indication signal from the mobile device (122) within the predetermined interval, and
transmit the changed cached availability status to the host service (102).

28. The wireless communication system (100) of claim 26, wherein, after the wireless router system (110) makes the cached availability status of the mobile device (122) equal to unavailable, the wireless router system (110) is further configured to:
change the cached availability status at the wireless router system (110) to available if the wireless router system (110) receives the indication signal from the mobile device (122), and
transmit the changed cached availability status from the wireless router system (110) to the host service (102).

29. The wireless communication system (100) of claim 22, wherein, after the wireless router system (110) transmits the data to the mobile device (122), the wireless router system (110) is further configured to:
determine whether the data transmission to the mobile device (122) has been successful based upon a confirmation signal transmitted from the mobile device (122) in response to successfully receiving the data,
re-determine the availability status of the mobile device (122) based upon the confirmation signal, and
update the cached availability status with the re-determined availability status.

30. The wireless communication system (100) of claim 29, wherein the wireless router system (110) is further configured to receive the confirmation signal within a predetermined time period after transmission of the data to the mobile device (122), and to re-transmit the data to the mobile device (122) until predetermined re-try logic is exhausted if the wireless router system (110) fails to receive the confirmation signal within the predetermined time period.

31. The wireless communication system (100) of claim 30, wherein the predetermined re-try logic includes at least one of:
a maximum number of re-transmissions,
a maximum overall time of re-transmissions, and
a maximum back-off time.

32. The wireless communication system (100) of claim 31, wherein, if the wireless router system (110) fails to receive the confirmation signal after the predetermined re-try logic is exhausted, the wireless router system (110) is further configured to:
update the cached availability status of the mobile device (122) at the wireless router system (110) to unavailable,
cause the host service (102) to update the availability status of the mobile device (122) to unavailable, and
cause the host service (102) to queue the data.

33. The wireless communication system (100) of claim 22, wherein the wireless router system (110) is further configured to:
evaluate the cached availability status of the mobile device (122) after the reception of the data from the host service (102),
if the evaluated cached availability status is equal to available,
transmit the data to the mobile device (122),
re-determine the cached availability status of the mobile device (122) based upon a confirmation signal from the mobile device (122) of successful reception of the transmitted data, and
update the cached availability status with the re-determined availability status,
if the evaluated cached availability status is equal to unavailable,
cause the host service (102) to update the availability status of the mobile device (122) based upon the evaluated cached availability status, and
cause the host service (102) to queue the data.

34. The wireless communication system (100) of claim 33, wherein the wireless router system (110) is further configured to receive the confirmation signal within a predetermined time period after transmission of the data to the mobile device (122), and to re-transmit the data to the mobile device (122) until a predetermined re-try logic is exhausted if the wireless router system (110) fails to receive the confirmation signal within the predetermined time period.

35. The wireless communication system (100) of claim 34, wherein the predetermined re-try logic includes at least one of:
a maximum number of re-transmissions,
a maximum overall time of re-transmissions, and
a maximum back-off time.

36. The wireless communication system (100) of claim 35, wherein, if the wireless router system (110) fails to receive the confirmation signal after the predetermined re-try logic is exhausted, the wireless router system (110) is further configured to:
update the cached availability status of the mobile device (122) to unavailable;
cause the host service (102) to update the availability status of the mobile device (122) to unavailable, and
cause the host service (102) to queue the data.

## Patentansprüche

1. Verfahren zur Verwendung in einem drahtlosen Kommunikationssystem (100) zum adaptiven Liefern von Daten von einem Host-Dienst (102) an eine drahtlose mobile Kommunikationsvorrichtung (122) durch ein drahtloses Router-System (110), das mit einer Vielzahl von drahtlosen Kommunikationsnetzwerken (114, 116 und 118) und einer Vielzahl von Host-Diensten (102, 104, 106) für Kommunikationen verbunden ist, wobei das Verfahren umfasst:
Erzeugen der Daten an dem Host-Dienst (102),
Bestimmen an dem Host-Dienst (102), ob ein Verfügbarkeits-Status der mobilen Vorrichtung (122) in dem drahtlosen Kommunikationsnetzwerk (116) bekannt ist, wobei der Verfügbarkeits-Status der mobilen Vorrichtung (122) in dem drahtlosen Kommunikationsnetzwerk (116) von dem drahtlosen Router-System (110) als verfügbar oder unverfügbar gesetzt und an diesem gespeichert wird,
wenn der Verfügbarkeits-Status an dem Host-Dienst (102) bekannt ist,
Übertragen der Daten von dem Host-Dienst (102) an das drahtlose Router-System (110), wenn der bekannte Verfügbarkeits-Status an dem Host-Dienst (102) gleich verfügbar ist, und
Einreihen der Daten an den Host-Dienst (102) ohne Übertragung an das drahtlose Router-System (110), wenn der bekannte Verfügbarkeits-Status gleich unverfügbar ist,
wenn der Verfügbarkeits-Status an dem Host-Dienst (102) nicht bekannt ist,
Setzen eines gespeicherten Verfügbarkeits-Status der mobilen Vorrichtung (122) von dem drahtlosen Router-System (110) als den bekannten Verfügbarkeits-Status an dem Host-Dienst (102).

2. Verfahren nach Anspruch 1, das weiterhin umfasst:
Übertragen der Daten von dem drahtlosen Router-System (110) an die mobile Vorrichtung (122), wenn der bekannte Verfügbarkeits-Status an dem Host-Dienst (102) gleich verfügbar ist.

3. Verfahren nach Anspruch 2, das weiterhin umfasst:
Vor Setzen eines gespeicherten Verfügbarkeits-Status der mobilen Vorrichtung (122) an einem drahtlosen Router-System (110) als den bekannten Verfügbarkeits-Status an dem Host-Dienst (102),
Anfordern des gespeicherten Verfügbarkeits-Status der mobilen Vorrichtung von dem drahtlosen Router-System.

4. Verfahren nach Anspruch 3, wobei ein Erzeugen der Daten an dem Host-Dienst (102) umfasst:
Erzeugen der Daten in Antwort auf ein Empfangen von korrespondierenden Daten, und
Einreihen der Daten an dem Host-Dienst (102).

5. Verfahren nach Anspruch 4, das nach einem Einreihen der Daten an dem Host-Dienst (102) weiterhin umfasst:
Aktualisieren des gespeicherten Verfügbarkeits-Status der mobilen Vorrichtung (122) an dem drahtlosen Router-System (110) auf verfügbar, wenn das drahtlose Router-System (110) ein Hinweissignal empfängt,
Übertragen des aktualisierten gespeicherten Verfügbarkeits-Status von verfügbar an den Host-Dienst (102) von dem drahtlosen Router-System (110),
Übertragen der eingereihten Daten von dem Host-Dienst (102) an das drahtlose Router-System (110), und
Löschen der eingereihten Daten von dem Host-Dienst (102), wenn die Übertragung an die mobile Vorrichtung (122) erfolgreich ist.

6. Verfahren nach Anspruch 5, wobei ein Bestimmen an dem Host-Dienst (102), ob der Verfügbarkeits-Status der mobilen Vorrichtung (122) in dem drahtlosen Kommunikationssystem (100) bekannt ist, auf einem gespeicherten Verfügbarkeits-Status basiert und wenigstens eines umfasst:
Bestimmen, dass der Verfügbarkeits-Status an dem Host-Dienst (102) unbekannt ist, wenn dort ein Verfügbarkeits-Status an dem Host-Dienst (102) nicht gespeichert ist,
Bestimmen, dass der Verfügbarkeits-Status an dem Host-Dienst (102) unbekannt ist, wenn eine vorbestimmte Zeitdauer seit Speichern des Verfügbarkeits-Status vergangen ist, und
Bestimmen, dass der Verfügbarkeits-Status an dem Host-Dienst (102) unbekannt ist, wenn eine Verbindung zwischen dem Host-Dienst (102) und dem drahtlosen Router-System (110) verlorengegangen ist.

7. Verfahren nach Anspruch 6, wobei der gespeicherte Verfügbarkeits-Status der mobilen Vorrichtung (122) an dem drahtlosen Router-System (110) auf einem Hinweissignal von der mobilen Vorrichtung (122) basiert.

8. Verfahren nach Anspruch 7, wobei das Hinweissignal eine Vielzahl von Funktionalitätszuständen der mobilen Vorrichtung (122) umfasst.

9. Verfahren nach Anspruch 8, das weiterhin umfasst:
Herstellen des gespeicherten Verfügbarkeits-Status der mobilen Vorrichtung (122) an dem drahtlosen Router-System (110) gleich auf verfügbar, wenn das drahtlose Router-System (110) das Hinweissignal von der drahtlosen Vorrichtung (122) empfängt, und
Herstellen des gespeicherten Verfügbarkeits-Status der mobilen Vorrichtung (122) an dem drahtlosen Router-System (110) gleich auf unverfügbar, wenn das drahtlose Router-System (110) fehlgeht, das Hinweissignal von der drahtlosen Vorrichtung (122) zu empfangen.

10. Verfahren nach Anspruch 9, das weiterhin umfasst:
Nach Herstellen des gespeicherten Verfügbarkeits-Status der mobilen Vorrichtung (122) an dem drahtlosen Router-System (110) gleich auf verfügbar,
Halten des gespeicherten Verfügbarkeits-Status an dem drahtlosen Router-System (110) gleich auf verfügbar, wenn das drahtlose Router-System (110) das Hinweissignal von der mobilen Vorrichtung (122) in einem vorbestimmten Intervall empfängt, und
Ändern des gespeicherten Verfügbarkeits-Status an dem drahtlosen Router-System (110) auf unverfügbar, wenn das drahtlose Router-System (110) fehlgeht, das Hinweissignal von der mobilen Vorrichtung (122) in dem vorbestimmten Intervall zu empfangen, und
Übertragen des geänderten gespeicherten Verfügbarkeits-Status von dem drahtlosen Router-System (110) an den Host-Dienst (102),
nach Herstellen des gespeicherten Verfügbarkeits-Status der mobilen Vorrichtung (122) an dem drahtlosen Router-System (110) gleich auf unverfügbar,
Ändern des gespeicherten Verfügbarkeits-Status an dem drahtlosen Router-System (110) auf verfügbar, wenn das drahtlose Router-System (110) das Hinweissignal von der mobilen Vorrichtung (122) empfängt, und
Übertragen des geänderten gespeicherten Verfügbarkeits-Status von dem drahtlosen Router-System (110) an den Host-Dienst (102).

11. Verfahren nach Anspruch 5, das, nach Übertragen der Daten von dem drahtlosen Router-System (110) an die mobile Vorrichtung (122), weiterhin umfasst:
Bestimmen, ob die Datenübertragung von dem drahtlosen Router-System (110) an die mobile Vorrichtung (122) erfolgreich gewesen ist, basierend auf einem Bestätigungssignal, das von der mobilen Vorrichtung (122) in Antwort auf ein erfolgreiches Empfangen der Daten übertragen wird,
erneutes Bestimmen des Verfügbarkeits-Status der mobilen Vorrichtung (122) an dem drahtlosen Router-System (110) basierend auf dem Bestätigungssignal, und
Aktualisieren des gespeicherten Verfügbarkeits-Status an dem drahtlosen Router-System (110) mit dem erneut bestimmten Verfügbarkeits-Status.

12. Verfahren nach Anspruch 11, wobei ein Bestimmen, ob die Datenübertragung von dem drahtlosen Router-System (110) an die mobile Vorrichtung (122) erfolgreich gewesen ist, basierend auf dem Bestätigungssignal, das von der mobilen Vorrichtung (122) in Antwort auf ein erfolgreiches Empfangen der Daten übertragen wird, umfasst:
Empfangen des Bestätigungssignals in einer vorbestimmten Zeitdauer nach Übertragen der Daten von dem drahtlosen Router-System (110) an die mobile Vorrichtung (122), und,
wenn das drahtlose Router-System (110) fehlgeht, das Bestätigungssignal in der vorbestimmten Zeitdauer zu empfangen, erneutes Übertragen der Daten von dem drahtlosen Router-System (110) an die mobile Vorrichtung (122), bis eine vorbestimmte Wiederversuchs-Schaltung ausgeschaltet wird.

13. Verfahren nach Anspruch 12, wobei die vorbestimmte Wiederversuchs-Schaltung wenigstens eines umfasst:
Eine Anzahl von erneuten Übertragungen,
eine maximale Gesamtzeit von erneuten Übertragungen, und
eine maximale Zurücksetzungs-Zeit.

14. Verfahren nach Anspruch 13, das, wenn das drahtlose Router-System (110) fehlgeht, das Bestätigungssignal zu empfangen, nachdem die vorbestimmte Wiederversuchs-Schaltung ausgeschaltet wird, weiterhin umfasst:
Aktualisieren des gespeicherten Verfügbarkeits-Status der mobilen Vorrichtung (122) an dem drahtlosen Router-System (110) auf unverfügbar,
Übertragen des aktualisierten Verfügbarkeits-Status von unverfügbar an den Host-Dienst (102) von dem drahtlosen Router-System (110), und
Einreihen der Daten an dem Host-Dienst (102).

15. Verfahren nach Anspruch 5, das, nach Übertragen der Daten von dem Host-Dienst (102) an das drahtlose Router-System (110), weiterhin umfasst:
Bewerten des gespeicherten Verfügbarkeits-Status der mobilen Vorrichtung (122) an dem drahtlosen Router-System (110),
wenn der bewertete gespeicherte Verfügbarkeits-Status gleich verfügbar ist,
Übertragen der Daten von dem drahtlosen Router-System (110) an die mobile Vorrichtung (122),
erneutes Bestimmen des gespeicherten Verfügbarkeits-Status der mobilen Vorrichtung (122) an dem drahtlosen Router-System (110) basierend auf einem Bestätigungssignal eines erfolgreichen Empfangs der übertragenen Daten von der mobilen Vorrichtung (122), und
Aktualisieren des gespeicherten Verfügbarkeits-Status an dem drahtlosen Router-System (110) mit dem erneut bestimmten Verfügbarkeits-Status, und
wenn der bewertete gespeicherte Verfügbarkeits-Status gleich unverfügbar ist,
Aktualisieren des gespeicherten Verfügbarkeits-Status der mobilen Vorrichtung (122) an dem Host-Dienst (102) basierend auf dem bewerteten gespeicherten Verfügbarkeits-Status an dem drahtlosen Router-System (110), und Einreihen der Daten an dem Host-Dienst (102).

16. Verfahren nach Anspruch 15, wobei ein erneutes Bestimmen des gespeicherten Verfügbarkeits-Status der mobilen Vorrichtung (122) basierend auf dem Bestätigungssignal eines erfolgreichen Empfangs der übertragenen Daten von der mobilen Vorrichtung (122) umfasst:
Empfangen des Bestätigungssignals in einer vorbestimmten Zeitdauer nach Übertragen der Daten von dem drahtlosen Router-System (110) an die mobile Vorrichtung (122), und,
wenn das drahtlose Router-System (110) fehlgeht, das Bestätigungssignal in der vorbestimmten Zeitdauer zu empfangen, erneutes Übertragen der Daten von dem drahtlosen Router-System (110) an die mobile Vorrichtung (122), bis eine vorbestimmte Wiederversuchs-Schaltung ausgeschaltet wird.

17. Verfahren nach Anspruch 16, wobei die vorbestimmte Wiederversuchs-Schaltung wenigstens eines umfasst:
Eine Anzahl von erneuten Übertragungen,
eine maximale Gesamtzeit von erneuten Übertragungen, und
eine maximale Zurücksetzungs-Zeit.

18. Verfahren nach Anspruch 17, das, wenn das drahtlose Router-System (110) fehlgeht, das Bestätigungssignal zu empfangen, nachdem die vorbestimmte Wiederversuchs-Schaltung ausgeschaltet wird, weiterhin umfasst:
Aktualisieren des gespeicherten Verfügbarkeits-Status der mobilen Vorrichtung (122) an dem drahtlosen Router-System (110) auf unverfügbar,
Übertragen des aktualisierten Verfügbarkeits-Status von unverfügbar an den Host-Dienst (102) von dem drahtlosen Router-System (110), und
Einreihen der Daten an dem Host-Dienst (102).

19. Drahtloses Kommunikationssystem (100), das konfiguriert ist, um Daten an eine drahtlose mobile Kommunikationsvorrichtung zu liefern, wobei das drahtlose Kommunikation System (100) umfasst:
Einen Host-Dienst (102), der konfiguriert ist, um die Daten, welche an die mobile Vorrichtung (122) zu liefern sind, zu erzeugen, um zu bestimmen, ob ein Verfügbarkeits-Status der mobilen Vorrichtung (122) in einem drahtlosen Kommunikationsnetzwerk (116) bekannt ist, um die Daten zu übertragen, wenn der bekannte Verfügbarkeits-Status gleich verfügbar ist, und um die Daten ohne Übertragung einzureihen, wenn der bekannte Verfügbarkeits-Status gleich unverfügbar ist,
ein drahtloses Router-System (110), das mit einer Vielzahl von drahtlosen Kommunikationsnetzwerken (114, 116 und 118), welche das drahtlose Kommunikationsnetzwerk (116) umfasst, und einer Vielzahl von Host-Diensten (110, 112, 114), welche den Host-Dienst (102) umfasst, verbunden ist, wobei das drahtlose Router-System (110) konfiguriert ist, um den Verfügbarkeits-Status der mobilen Vorrichtung (122) in dem drahtlosen Kommunikationsnetzwerken (116) als verfügbar oder unverfügbar zu bestimmen und zu speichern, um die Daten von dem Host-Dienst (102) zu empfangen, wenn der Verfügbarkeits-Status der mobilen Vorrichtung (122) verfügbar ist, und um die Daten zu übertragen, und
wobei das drahtlose Kommunikationsnetzwerk (116), das mit dem drahtlosen Router-System (110) und der mobilen Vorrichtung (122) verbunden ist, wobei das drahtlose Kommunikationsnetzwerk (116) konfiguriert ist, um die Daten von dem drahtlosen Router-System (110) zu empfangen und um die Daten an die mobile Vorrichtung (122) zu übertragen,
wobei:
Wenn der Host-Dienst (102) bestimmt, dass der Verfügbarkeits-Status der mobilen Vorrichtung (122) in dem drahtlosen Kommunikationsnetzwerk (116) nicht bekannt ist, der Host-Dienst (102) weiterhin konfiguriert ist, um den bekannten Verfügbarkeits-Status basierend auf dem gespeicherten Verfügbarkeits-Status der mobilen Vorrichtung (122) an dem drahtlosen Router-System (110) zu setzen, um die Daten zu übertragen, wenn der gesetzte bekannte Verfügbarkeits-Status gleich verfügbar ist und um die Daten einzureihen, wenn der gesetzte bekannte Verfügbarkeits-Status gleich unverfügbar ist.

20. Drahtloses Kommunikationssystem (100) nach Anspruch 19, wobei die erzeugten Daten umfassen:
Die Daten, welche in Antwort auf den Host-Dienst (102) korrespondierende Daten empfangen, und
die Daten, welche an dem Host-Dienst (102) eingereiht sind.

21. Drahtloses Kommunikationssystem (100) nach Anspruch 20, wobei, wenn das drahtlose Router-System (110) ein Hinweissignal empfängt, nachdem die Daten an dem Host-Dienst (102) eingereiht sind, das drahtlose Router-System (110) weiterhin konfiguriert ist, um:
Den gespeicherten Verfügbarkeits-Status der mobilen Vorrichtung (122) auf verfügbar zu aktualiseren,
den aktualisierten Verfügbarkeits-Status der mobilen Vorrichtung (122) an den Host-Dienst (102) zu übertragen,
Empfangen der eingereihten Daten von dem Host-Dienst (102), und
die eingereihten Daten an die mobile Vorrichtung (122) zu übertragen.

22. Drahtloses Kommunikationssystem (100) nach Anspruch 22, wobei der Host-Dienst (102) weiterhin konfiguriert ist, um die eingereihten Daten zu löschen, wenn die Übertragung der eingereihten Daten an die mobile Vorrichtung (122) erfolgreich ist.

23. Drahtloses Kommunikationssystem (100) nach Anspruch 22, wobei der Host-Dienst (102) weiterhin konfiguriert ist, um zu bestimmen, ob der Verfügbarkeits-Status der mobilen Vorrichtung (122) in dem drahtlosen Kommunikationsnetzwerk (116) bekannt ist, basierend auf einem gespeicherten Verfügbarkeits-Status an dem Host-Dienst (102), und um den Verfügbarkeits-Status an dem Host-Dienst (102) auf unbekannt zu setzen, wenn:
Dort ein Verfügbarkeits-Status nicht gespeichert ist,
eine vorbestimmte Zeitdauer vergangen ist, seitdem der Verfügbarkeits-Status gespeichert worden ist, und
eine Verbindung zwischen dem Host-Dienst (102) und dem drahtlosen Router-System (110) verlorengegangen ist.

24. Drahtloses Kommunikationssystem (100) nach Anspruch 23, wobei der gespeicherte Verfügbarkeits-Status der mobilen Vorrichtung (122) an dem drahtlosen Router-System (110) auf einem Hinweissignal von der mobilen Vorrichtung (122) basiert.

25. Drahtloses Kommunikationssystem (100) nach Anspruch 24, wobei das Hinweissignal eine Vielzahl von Funktionalitätszuständen der mobilen Vorrichtung (122) umfasst.

26. Drahtloses Kommunikationssystem (100) nach Anspruch 25, wobei das drahtlose Router-System (110) weiterhin konfiguriert ist, um den gespeicherten Verfügbarkeits-Status der mobilen Vorrichtung (122) gleich auf verfügbar herzustellen, wenn das drahtlose Router-System (100) das Hinweissignal von der mobilen Vorrichtung (122) empfängt, und um den gespeicherten Verfügbarkeits-Status der mobilen Vorrichtung (122) an dem drahtlosen Router-System (110) gleich auf unverfügbar herzustellen, wenn das drahtlose Router-System (110) fehlgeht, das Hinweissignal von der mobilen Vorrichtung (122) zu empfangen.

27. Drahtloses Kommunikationssystem (100) nach Anspruch 26, wobei, nachdem das drahtlose Router-System (110) den gespeicherten Verfügbarkeits-Status der mobilen Vorrichtung (122) gleich auf verfügbar herstellt, das drahtlose Router-System (110) weiterhin konfiguriert ist, um:
Den gespeicherten Verfügbarkeits-Status an dem drahtlosen Router-System (110) gleich auf verfügbar zu halten, wenn das drahtlose Router-System (110) das Hinweissignal von der mobilen Vorrichtung (192) in einem vorbestimmten Intervall empfängt,
den gespeicherten Verfügbarkeits-Status auf unverfügbar zu ändern, wenn das drahtlose Router-System (110) fehlgeht, das Hinweissignal von der mobilen Vorrichtung (122) in dem vorbestimmten Intervall zu empfangen, und
den geänderten gespeicherten Verfügbarkeits-Status an den Host-Dienst (102) zu übertragen.

28. Drahtloses Kommunikationssystem (100) nach Anspruch 26, wobei, nachdem das drahtlose Router-System (110) den gespeicherten Verfügbarkeits-Status der mobilen Vorrichtung (122) gleich auf unverfügbar herstellt, das drahtlose Router-System (110) weiterhin konfiguriert ist, um:
Den gespeicherten Verfügbarkeits-Status an dem drahtlosen Router-System (110) auf verfügbar zu ändern, wenn das drahtlose Router-System (110) das Hinweissignal von der mobilen Vorrichtung (122) empfängt, und
den geänderten gespeicherten Verfügbarkeits-Status von dem drahtlosen Router-System (110) an den Host-Dienst (102) zu übertragen.

29. Drahtloses Kommunikationssystem (100) nach Anspruch 22, wobei, nachdem das drahtlose Router-System (110) die Daten an die mobile Vorrichtung (122) überträgt, das drahtlose Router-System (110) weiterhin konfiguriert ist, um:
Zu bestimmen, ob die Datenübertragung an die mobile Vorrichtung (122) erfolgreich gewesen ist, basierend auf einem Bestätigungssignal, das von der mobilen Vorrichtung (122) in Antwort auf ein erfolgreiches Empfangen der Daten übertragen ist,
den Verfügbarkeits-Status der mobilen Vorrichtung (122) basierend auf dem Bestätigungssignal erneut zu bestimmen, und den gespeicherten Verfügbarkeits-Status mit dem neu bestimmten Verfügbarkeits-Status zu aktualisieren.

30. Drahtloses Kommunikationssystem (100) nach Anspruch 29, wobei das drahtlose Router-System (110) weiterhin konfiguriert ist, um das Bestätigungssignal in einer vorbestimmten Zeitdauer nach Übertragung der Daten an die mobile Vorrichtung (122) zu empfangen und um die Daten an die mobile Vorrichtung (122) erneut zu übertragen, bis eine vorbestimmte Wiederversuchs-Schaltung ausgeschaltet ist, wenn das drahtlose Router-System (110) fehlgeht, das Bestätigungssignal in der vorbestimmten Zeitdauer zu empfangen.

31. Drahtloses Kommunikationssystem (100) nach Anspruch 30, wobei die vorbestimmte Wiederversuchs-Schaltung wenigstens eines umfasst:
Eine Anzahl von erneuten Übertragungen,
eine maximale Gesamtzeit von erneuten Übertragungen, und
eine maximale Zurücksetzungs-Zeit.

32. Drahtloses Kommunikationssystem (100) nach Anspruch 31, wobei, wenn das drahtlose Router-System (110) fehlgeht, das Bestätigungssignal zu empfangen, nachdem die vorbestimmte Wiederversuchs-Schaltung ausgeschaltet ist, das drahtlose Router-System (110) weiterhin konfiguriert ist, um:
Den gespeicherten Verfügbarkeits-Status der mobilen Vorrichtung (122) an dem drahtlosen Router-System (110) auf unverfügbar zu aktualisieren,
den Host-Dienst (102) zu veranlassen, den Verfügbarkeits-Status der mobilen Vorrichtung (122) auf unverfügbar zu aktualisieren, und
den Host-Dienst (102) zu veranlassen, die Daten einzureihen.

33. Drahtloses Kommunikationssystem (100) nach Anspruch 22, wobei der des drahtlose Router-System (110) weiterhin konfiguriert ist, um:
Den gespeicherten Verfügbarkeits-Status der mobilen Vorrichtung (122) nach dem Empfang der Daten von dem Host-Dienst (102) zu bewerten,
wenn der bewertete gespeicherte Verfügbarkeits-Status gleich verfügbar ist,
die Daten an die mobile Vorrichtung (122) zu übertragen,
den gespeicherten Verfügbarkeits-Status der mobilen Vorrichtung (122) basierend auf einem Bestätigungssignal eines erfolgreichen Empfangs der übertragenen Daten von der mobilen Vorrichtung (122) erneut zu bestimmen, und
den gespeicherten Verfügbarkeits-Status mit dem erneut bestimmten Verfügbarkeits-Status zu aktualisieren,
wenn der bewertete gespeicherte Verfügbarkeits-Status gleich unverfügbar ist,
den Host-Dienst (102) zu veranlassen, den Verfügbarkeits-Status der mobilen Vorrichtung (122) basierend auf dem bewerteten gespeicherten Verfügbarkeits-Status zu aktualisieren, und
den Host-Dienst (102) zu veranlassen, die Daten einzureihen.

34. Drahtloses Kommunikationssystem (100) nach Anspruch 33, wobei das drahtlose Router-System (110) weiterhin konfiguriert ist, das Bestätigungssignal in einer vorbestimmten Zeitdauer nach Übertragung der Daten an die mobile Vorrichtung (122) zu empfangen und die Daten an die mobile Vorrichtung (122) erneut zu übertragen, bis eine vorbestimmte Wiederversuchs-Schaltung ausgeschaltet ist, wenn das drahtlose Router-System (110) fehlgeht, das Bestätigungssignal in der vorbestimmten Zeitdauer zu empfangen.

35. Drahtloses Kommunikationssystem (100) nach Anspruch 34, wobei die vorbestimmte Wiederversuchs-Schaltung wenigstens eines umfasst:
Eine Anzahl von erneuten Übertragungen,
eine maximale Gesamtzeit von erneuten Übertragungen, und
eine maximale Zurücksetzungs-Zeit.

36. Drahtloses Kommunikationssystem (100) nach Anspruch 35, wobei, wenn das drahtlose Router-System (110) fehlgeht, das Bestätigungssignal zu empfangen, nachdem die vorbestimmte Wiederversuchs-Schaltung ausgeschaltet ist, das drahtlose Router-System (110) weiterhin konfiguriert ist, um:
Den gespeicherten Verfügbarkeits-Status der mobilen Vorrichtung (122) auf unverfügbar zu aktualisieren,
den Host-Dienst (102) zu veranlassen, den Verfügbarkeits-Status der mobilen Vorrichtung (122) auf unverfügbar zu aktualisieren, und
den Host-Dienst (102) zu veranlassen, die Daten einzureihen.

## Revendications

1. Procédé destiné à une utilisation dans un système (100) de communication sans fil pour fournir de manière adaptative des données à partir d'un service (102) d'hôte à un dispositif (122) de communication mobile sans fil à travers un système (110) de routeur sans fil qui est relié à une pluralité de réseaux (114, 116 et 118) de communication sans fil et une pluralité de services (102, 104, 106) d'hôte pour des communications, le procédé comprenant :
la production des données au service (102) d'hôte ;
la détermination au service (102) d'hôte du fait qu'un statut de disponibilité du dispositif (122) mobile dans le réseau (116) de communication sans fil est connu, le statut de disponibilité du dispositif (122) mobile dans le réseau (116) de communication sans fil étant établi par et mis en antémémoire au système (110) de routeur sans fil en tant que l'un de disponible et indisponible ;
si le statut de disponibilité est connu au service (102) d'hôte,
la transmission des données à partir du service (102) d'hôte vers le système (110) de routeur sans fil si le statut de disponibilité connu au service (102) d'hôte correspond à disponible ; et
la mise en file d'attente des données au service (102) d'hôte sans transmission vers le système (110) de routeur sans fil si le statut de disponibilité connu correspond à indisponible ;
si le statut de disponibilité n'est pas connu au service (102) d'hôte,
l'établissement, au service (102) d'hôte, d'un statut de disponibilité mis en antémémoire du dispositif (122) mobile à partir du système (110) de routeur sans fil comme étant le statut de disponibilité connu.

2. Procédé selon la revendication 1, comprenant de plus :
la transmission des données à partir du système (110) de routeur sans fil vers le dispositif (122) mobile si le statut de disponibilité connu au service (102) d'hôte correspond à disponible.

3. Procédé selon la revendication 2, comprenant de plus :
avant l'établissement d'un statut de disponibilité mis en antémémoire du dispositif (122) mobile à un-système (110) de routeur sans fil comme étant le statut de disponibilité connu au service (102) d'hôte,
la requête du statut disponible mis en antémémoire du dispositif mobile à partir du système de routeur sans fil.

4. Procédé selon la revendication 3 dans lequel la production des données au service (102) d'hôte comporte :
la production des données en réponse à la réception de données correspondantes ; et la mise en file d'attente des données au service (102) d'hôte.

5. Procédé selon la revendication 4 après avoir mis en file d'attente les données au service (102) d'hôte, comprenant de plus :
la mise à jour du statut de disponibilité mis en antémémoire du dispositif (122) mobile au système (110) de routeur sans fil sur disponible si le système (110) de routeur sans fil reçoit un signal d'indication ;
la transmission du statut de disponibilité mis en antémémoire et mis à jour correspondant à disponible vers le service (102) d'hôte à partir du système (110) de routeur sans fil ;
la transmission des données mises en file d'attente à partir du service (102) d'hôte vers le système (110) de routeur sans fil ; et
la purge des données mises en file d'attente à partir du service (102) d'hôte si la transmission vers le dispositif (122) mobile est réussie.

6. Procédé selon la revendication 5 dans lequel une détermination au service (102) d'hôte du fait que le statut de disponibilité du dispositif (122) mobile dans le système (100) de communication sans fil est connu ou non est basée sur un statut de disponibilité stocké au service (102) d'hôte et comporte au moins l'une parmi :
une détermination du fait que le statut de disponibilité au service (102) d'hôte est inconnu s'il n'y a aucun statut de disponibilité stocké au service (102) d'hôte ;
une détermination du fait que le statut de disponibilité au service (102) d'hôte est inconnu si une période de temps prédéterminée s'est écoulée depuis le stockage du statut de disponibilité ; et
une détermination du fait que le statut de disponibilité au service (102) d'hôte est inconnu si une liaison entre le service (102) d'hôte et le système (110) de routeur sans fil est perdue.

7. Procédé selon la revendication 6 dans lequel le statut de disponibilité mis en antémémoire du dispositif (122) mobile au système (110) de routeur sans fil est basé sur un signal d'indication à partir du dispositif (122) mobile.

8. Procédé selon la revendication 7 dans lequel le signal d'indication comporte une pluralité d'états de fonctionnalité du dispositif (122) mobile.

9. Procédé selon la revendication 8, comprenant de plus :
le fait de faire correspondre le statut de disponibilité mis en antémémoire du dispositif (122) mobile au système (110) de routeur sans fil à disponible si le système (110) de routeur sans fil reçoit le signal d'indication à partir du dispositif (122) sans fil, et
le fait de faire correspondre le statut de disponibilité mis en antémémoire du dispositif (122) mobile au système (110) de routeur sans fil à indisponible si le système (110) de routeur sans fil ne reçoit pas le signal d'indication à partir du dispositif (122) mobile.

10. Procédé selon la revendication 9, comprenant de plus :
après avoir fait correspondre le statut de disponibilité mis en antémémoire du dispositif (122) mobile au système (110) de routeur sans fil à disponible,
le maintien du statut de disponibilité mis en antémémoire au système (110) de routeur sans fil égal à disponible si le système (110) de routeur sans fil reçoit le signal d'indication à partir du dispositif (122) mobile à un intervalle prédéterminé ; et
le changement du statut de disponibilité mis en antémémoire au système (110) de routeur sans fil en indisponible si le système (110) de routeur sans fil échoue à recevoir le signal d'indication à partir du dispositif (122) mobile dans l'intervalle prédéterminé, et
la transmission du statut de disponibilité mis en antémémoire modifié à partir du système (110) de routeur sans fil au service (102) d'hôte ;
après avoir fait correspondre le statut de disponibilité mis en antémémoire du dispositif (122) mobile au système (110) de routeur sans fil à indisponible,
le changement du statut de disponibilité mis en antémémoire au système (110) de routeur sans fil en disponible si le système (110) de routeur sans fil reçoit le signal d'indication à partir du dispositif (122) mobile, et
la transmission du statut de disponibilité mis en antémémoire modifié à partir du système (110) de routeur sans fil au service (102) d'hôte.

11. Procédé selon la revendication 5, après avoir transmis les données à partir du système (110) de routeur sans fil vers le dispositif (122) mobile, comprenant de plus :
la détermination du fait que la transmission de données à partir du système (110) de routeur sans fil vers le dispositif (122) mobile a été réussie sur la base d'un signal de confirmation transmis à partir du dispositif (122) mobile en réponse à la réception des données avec succès ;
la redétermination du statut de disponibilité du dispositif (122) mobile au système (110) de routeur sans fil sur la base du signal de confirmation ; et
la mise à jour du statut de disponibilité mis en antémémoire au système (110) de routeur sans fil avec le statut de disponibilité redéterminé.

12. Procédé selon la revendication 11 dans lequel une détermination du fait que la transmission de données à partir du système (110) de routeur sans fil vers le dispositif (122) mobile a été réussie sur la base du signal de confirmation transmis à partir du dispositif (122) mobile en réponse à la réception des données avec succès comporte :
la réception du signal de confirmation au cours d'une période de temps prédéterminée après avoir transmis les données à partir du système (110) de routeur sans fil vers le dispositif (122) mobile ; et
si le système (110) de routeur sans fil ne reçoit pas le signal de confirmation au cours de la période de temps prédéterminée, la retransmission des données à partir du système (110) de routeur sans fil vers le dispositif (122) mobile jusqu'à ce que la logique de nouvelle tentative prédéterminée soit épuisée.

13. Procédé selon la revendication 12, dans lequel la logique de nouvelle tentative prédéterminée comporte au moins l'un parmi :
un nombre maximal de retransmissions,
un temps global maximal de retransmissions, et
un temps maximal de retour.

14. Procédé selon la revendication 13, si le système (110) de routeur sans fil ne reçoit pas le signal de confirmation après que la logique de nouvelle tentative prédéterminée est épuisée, comprenant de plus :
la mise à jour du statut de disponibilité mis en antémémoire du dispositif (122) mobile au système (110) de routeur sans fil sur indisponible ;
la transmission du statut de disponibilité mis à jour d'indisponible vers le service (102) d'hôte à partir du système (110) de router sans fil ; et
la mise en file d'attente des données au service (102) d'hôte.

15. Procédé selon la revendication 5, après avoir transmis les données à partir du service (102) d'hôte vers le système (110) de routeur sans fil, comprenant de plus :
l'évaluation du statut de disponibilité mis en antémémoire du dispositif (122) mobile au système (110) de routeur sans fil ;
si le statut de disponibilité mis en antémémoire évalué correspond à disponible,
la transmission des données à partir du système (110) de routeur sans fil vers le dispositif (122) mobile ;
la redétermination du statut de disponibilité mis en antémémoire du dispositif (122) mobile au système (110) de routeur sans fil sur la base d'un signal de confirmation à partir du dispositif (122) mobile d'une réception réussie des données transmises ; et
la mise à jour du statut de disponibilité mis en antémémoire au système (110) de routeur sans fil avec le statut de disponibilité redéterminé ; et
si le statut de disponibilité mis en antémémoire évalué correspond à indisponible ;
la mise à jour du statut de disponibilité du dispositif (122) mobile au service (102) d'hôte sur la base du statut de disponibilité mis en antémémoire évalué au système (110) de routeur sans fil ; et
la mise en file d'attente des données au service (102) d'hôte.

16. Procédé selon la revendication 15, dans lequel une redétermination du statut de disponibilité mis en antémémoire du dispositif (122) mobile basée sur le signal de confirmation à partir du dispositif (122) mobile d'une réception réussie des données transmises comporte :
la réception du signal de confirmation au cours d'une période de temps prédéterminée après avoir transmis les données à partir du système (110) de routeur sans fil vers le dispositif (122) mobile ; et
si le système (110) de routeur sans fil ne reçoit pas le signal de confirmation au cours de la période de temps prédéterminée, la retransmission des données à partir du système (110) de routeur sans fil vers le dispositif (122) mobile jusqu'à ce que la logique de nouvelle tentative prédéterminée soit épuisée.

17. Procédé selon la revendication 16, dans lequel la logique de nouvelle tentative prédéterminée comporte au moins l'un parmi :
un nombre maximal de retransmissions,
un temps global maximal de retransmissions, et
un temps maximal de retour.

18. Procédé selon la revendication 17, si le système (110) de routeur sans fil ne reçoit pas le signal de confirmation après que la logique de nouvelle tentative prédéterminée est épuisée, comprenant de plus :
la mise à jour du statut de disponibilité mis en antémémoire du dispositif (122) mobile au système (110) de routeur sans fil sur indisponible ;
la transmission du statut de disponibilité mis à jour d'indisponible vers le service (110) d'hôte à partir du système (110) de routeur sans fil ; et
la mise en file d'attente des données au service (102) d'hôte.

19. Système (100) de communication sans fil configuré pour fournir de manière adaptative des données à un dispositif de communication mobile sans fil, le système (100) de communication sans fil comprenant :
un service (102) d'hôte configuré pour produire des données à fournir au dispositif (122) mobile, pour déterminer si un statut de disponibilité du dispositif (122) mobile dans un réseau (116) de communication sans fil est connu, pour transmettre des données si le statut de disponibilité connu correspond à disponible et mettre les données en file d'attente sans transmission si le statut de disponibilité connu correspond à indisponible ;
un système (110) de routeur sans fil relié à une pluralité de réseaux (114, 116 et 118) de communication sans fil qui comportent le réseau (116) de communication sans fil ainsi qu'une pluralité de services (110, 112, 114) d'hôte qui comportent le service (102) d'hôte, le système (110) de routeur sans fil étant configuré pour déterminer et mettre en antémémoire le statut de disponibilité du dispositif (122) mobile dans le réseau (116) de communication sans fil en tant que l'un de disponible et indisponible pour recevoir les données à partir du service (102) d'hôte lorsque le statut de disponibilité du dispositif (122) mobile est disponible, et pour transmettre les données ; et
le réseau (116) de communication sans fil relié au système (110) de routeur sans fil et au dispositif (122) mobile, le réseau (116) de communication sans fil configuré pour recevoir les données à partir du système (110) de routeur sans fil et pour transmettre les données au dispositif (122) mobile,
dans lequel :
si le service (102) d'hôte détermine que le statut de disponibilité du dispositif (122) mobile dans le réseau (116) de communication sans fil n'est pas connu, le service (102) d'hôte est configuré de plus pour établir le statut de disponibilité connu sur la base du statut de disponibilité mis en antémémoire du dispositif (122) mobile au système (110) de routeur sans fil, pour transmettre les données si le statut de disponibilité connu établi correspond à disponible, et pour mettre les données en file d'attente si le statut de disponibilité connu établi correspond à indisponible,

20. Système (100) de communication sans fil selon la revendication 19, dans lequel les données produites comportent :
les données produites en réponse au service (102) d'hôte recevant des données correspondantes, et
les données mises en file d'attente au service (102) d'hôte.

21. Système (100) de communication sans fil selon la revendication 20, dans lequel, si le système (110) de routeur sans fil reçoit un signal d'indication après que les données sont mises en file d'attente au service (102) d'hôte, le système (110) de routeur sans fil est configuré de plus pour :
mettre à jour le statut de disponibilité mis en antémémoire du dispositif (122) mobile sur disponible,
transmettre vers le service (102) d'hôte le statut de disponibilité mis à jour du dispositif (122) mobile,
recevoir les données mises en file d'attente à partir du service (102) d'hôte, et
transmettre les données mises en file d'attente vers le dispositif (122) mobile.

22. Système (100) de communication sans fil selon la revendication 21, dans lequel le service (102) d'hôte est configuré de plus pour purger les données mises en file d'attente si la transmission des données mises en file d'attente vers le dispositif (122) mobile est réussie.

23. Système (100) de communication sans fil selon la revendication 22, dans lequel le service (102) d'hôte est configuré de plus pour déterminer si le statut de disponibilité du dispositif (122) mobile dans le réseau (116) de communication sans fil est connu sur la base d'un statut de disponibilité stocké au service (102) d'hôte et pour établir le statut de disponibilité au service (102) d'hôte sur inconnu si :
il n'y a aucun statut de disponibilité stocké,
une période de temps prédéterminée s'est écoulée depuis que le statut de disponibilité a été stocké, et
une liaison entre le service (102) d'hôte et le système (110) de routeur sans fil est perdue.

24. Système (100) de communication sans fil selon la revendication 23, dans lequel le statut de disponibilité mis en antémémoire du dispositif (122) mobile au système (110) de routeur sans fil est basé sur un signal d'indication à partir du dispositif (122) mobile.

25. Système (100) de communication sans fil selon la revendication 24, dans lequel le signal d'indication comporte une pluralité d'états de fonctionnalité du dispositif (122) mobile.

26. Système (100) de communication sans fil selon la revendication 25, dans lequel le système (110) de routeur sans fil est configuré de plus pour faire correspondre le statut de disponibilité mis en antémémoire du dispositif (122) mobile à disponible si le système (110) de routeur sans fil reçoit le signal d'indication à partir du dispositif (122) mobile, et pour faire correspondre le statut de disponibilité mis en antémémoire du dispositif (122) mobile au système (110) de routeur sans fil à indisponible si le système (110) de routeur sans fil ne reçoit pas le signal d'indication à partir du dispositif (122) mobile.

27. Système (100) de communication sans fil selon la revendication 26, dans lequel, après que le système (110) de routeur sans fil fait correspondre le statut de disponibilité mis en antémémoire du dispositif (122) mobile à disponible, le système (110) de routeur sans fil est configuré de plus pour :
maintenir le statut de disponibilité mis en antémémoire au système (110) de routeur sans fil égal à disponible si le système (110) de routeur sans fil reçoit le signal d'indication à partir du dispositif (122) mobile à un intervalle prédéterminé,
changer le statut de disponibilité mis en antémémoire en indisponible si le système (110) de routeur sans fil échoue à recevoir le signal d'indication à partir du dispositif (122) mobile dans l'intervalle prédéterminé, et
transmettre le statut de disponibilité mis en antémémoire modifié au service (102) d'hôte.

28. Système (100) de communication sans fil selon la revendication 26, dans lequel, après que le système (110) de routeur sans fil fait correspondre le statut de disponibilité mis en antémémoire du dispositif (122) mobile à indisponible, le système (110) de routeur sans fil est configuré de plus pour :
changer le statut de disponibilité mis en antémémoire au système (110) de routeur sans fil en disponible si le système (110) de routeur sans fil reçoit le signal d'indication à partir du dispositif (122) mobile, et
transmettre le statut de disponibilité mis en antémémoire modifié à partir du système (110) de routeur sans fil vers le service (102) d'hôte.

29. Système (100) de communication sans fil selon la revendication 22, dans lequel, après que le système (110) de routeur sans fil transmet les données vers le dispositif (122) mobile, le système (110) de routeur sans fil est configuré de plus pour :
déterminer si la transmission de données vers le dispositif (122) mobile a été réussie sur la base d'un signal de confirmation transmis à partir du dispositif (122) mobile en réponse à la réception des données avec succès,
redéterminer le statut de disponibilité du dispositif (122) mobile sur la base du signal de confirmation, et
mettre à jour le statut de disponibilité mis en antémémoire avec le statut de disponibilité redéterminé.

30. Système (100) de communication sans fil selon la revendication 29, dans lequel le système (110) de routeur sans fil est configuré de plus pour recevoir le signal de confirmation au cours d'une période de temps prédéterminée après une transmission des données vers le dispositif (122) mobile, et pour retransmettre les données vers le dispositif (122) mobile jusqu'à ce que la logique de nouvelle tentative prédéterminée soit épuisée si le système (110) de routeur sans fil ne reçoit pas le signal de confirmation au cours de la période de temps prédéterminée.

31. Système (100) de communication sans fil selon la revendication 30, dans lequel la logique de nouvelle tentative prédéterminée comporte au moins l'un parmi :
un nombre maximal de retransmissions,
un temps global maximal de retransmissions, et
un temps maximal de retour.

32. Système (100) de communication sans fil selon la revendication 31, dans lequel, si le système (110) de routeur sans fil ne reçoit pas le signal de confirmation après que la logique de nouvelle tentative prédéterminée est épuisée, le système (110) de routeur sans fil est configuré de plus pour :
mettre à jour le statut de disponibilité mis en antémémoire du dispositif (122) mobile au système (110) de routeur sans fil sur indisponible,
amener le service (102) d'hôte à mettre à jour le statut de disponibilité du dispositif (122) mobile sur indisponible, et
amener le service (102) d'hôte à mettre les données en file d'attente.

33. Système (100) de communication sans fil selon la revendication 22, dans lequel le système (110) de routeur sans fil est configuré de plus pour :
évaluer le statut de disponibilité mis en antémémoire du dispositif (122) mobile après la réception des données à partir du service (102) d'hôte,
si le statut de disponibilité mis en antémémoire évalué correspond à disponible,
transmettre les données vers le dispositif (122) mobile,
redéterminer le statut de disponibilité mis en antémémoire du dispositif (122) mobile sur la base d'un signal de confirmation à partir du dispositif (122) mobile d'une réception réussie des données transmises, et
mettre à jour le statut de disponibilité mis en antémémoire avec le statut de disponibilité redéterminé,
si le statut de disponibilité mis en antémémoire évalué correspond à indisponible
amener le service (102) d'hôte à mettre à jour le statut de disponibilité du dispositif (122) mobile sur la base du statut de disponibilité mis en antémémoire évalué, et
amener le service (102) d'hôte à mettre les données en file d'attente.

34. Système (100) de communication sans fil selon la revendication 33, dans lequel le système (110) de routeur sans fil est configuré de plus pour recevoir le signal de confirmation au cours d'une période de temps prédéterminée après une transmission des données vers le dispositif (122) mobile, et pour retransmettre les données vers le dispositif (122) mobile jusqu'à ce qu'une logique de nouvelle tentative prédéterminée soit épuisée si le système (110) de routeur sans fil ne reçoit pas le signal de confirmation au cours de la période de temps prédéterminée.

35. Système (100) de communication sans fil selon la revendication 34, dans lequel la logique de nouvelle tentative prédéterminée comporte au moins l'un parmi :
un nombre maximal de retransmissions,
un temps global maximal de retransmissions, et
un temps maximal de retour.

36. Système (100) de communication sans fil selon la revendication 35, dans lequel, si le système (110) de routeur sans fil ne reçoit pas le signal de confirmation après que la logique de nouvelle tentative prédéterminée est épuisée, le système (110) de routeur sans fil est configuré de plus pour :
mettre à jour le statut de disponibilité mis en antémémoire du dispositif (122) mobile sur indisponible ;
amener le service (102) d'hôte à mettre à jour le statut de disponibilité du dispositif (122) mobile sur indisponible, et
amener le service (102) d'hôte à mettre les données en file d'attente.
